# EUROPEAN PATENT APPLICATION

(11) **EP 4 604 246 A1**
(43) Date of publication of application: **20.08.2025**
(21) Application number: 23885861.7
(22) Date of filing: 02.11.2023
(51) Int. Cl.: H01M 10/0562, H01M 4/06, H01M 4/13, H01M 4/525, H01M 4/62, H01M 6/18, H01M 10/052, H01M 10/054

(54) **BATTERY**

(30) Priority: 04.11.2022 JP 2022177556
(71) Applicant: Sumitomo Chemical Company, Limited, Tokyo 103-6020 (JP)
(72) Inventor: DOI, Atsunori, Niihama-shi, Ehime 792-8521 (JP)
(74) Representative: Vossius & Partner Patentanwälte Rechtsanwälte mbB
(86) International application number: PCT/JP2023/039679
(87) International publication number: WO 2024/096107

(57) **Abstract**

A battery including a laminate composed of a positive electrode layer and a solid electrolyte layer, in which the positive electrode layer contains a positive electrode active material and a solid electrolyte material, the solid electrolyte material contains an alkali metal element, a metal element or metalloid element except the alkali metal element, and a halogen element, and when the laminate is punched into a cylindrical shape having a diameter of 10 mm to prepare a test piece and the test piece is sandwiched between two SUS plates and subjected to impedance measurement, a resistance value is 1000 Ω or less.

## Description

### Technical Field

The present disclosure relates to a battery.

### Background Art

Batteries such as lithium ion batteries that perform charge and discharge in accordance with movement of metal ions between a positive electrode and a negative electrode are actively studied because of their high capacity. As an electrolyte for a lithium ion battery or the like, a solution of a lithium salt containing an organic solvent or an ionic liquid is known, and a solid electrolyte has been studied from the viewpoint of safety and processability. As the solid electrolyte, various kinds of compounds such as an oxide-based solid electrolyte and a sulfide-based solid electrolyte are known.

### Citation List

### Patent Literature

Patent Literature 1: WO 2019/135323 A
Patent Literature 2: WO 2021/002064 A

### Summary of Invention

### Technical Problem

Here, the positive electrode may also contain a solid electrolyte for the purpose of improving ion conductivity. However, a conventional positive electrode including a solid electrolyte is likely to generate microcracks and the like in the positive electrode.

The present disclosure has been made in view of the above circumstances, and an object thereof is to provide a battery in which microcracks and the like are less likely to occur in a positive electrode.

### Solution to Problem

The present disclosure includes the following embodiments [1] to [6].
[1] A battery including
   a laminate having a positive electrode layer and a solid electrolyte layer, in which
   the positive electrode layer contains a positive electrode active material and a solid electrolyte material,
   the solid electrolyte material contains an alkali metal element, a metal element or metalloid element except the alkali metal element, and a halogen element, and
   when the laminate is punched into a cylindrical shape having a diameter of 10 mm to prepare a test piece and the test piece is sandwiched between two SUS plates and subjected to impedance measurement, a resistance value is 1000 Ω or less.
[2] A battery including
   a laminate composed of a positive electrode layer and a solid electrolyte layer, in which
   the positive electrode layer contains a positive electrode active material and a solid electrolyte material,
   the solid electrolyte material contains an alkali metal element, a metal element or metalloid element except the alkali metal element, and a halogen element, and
   a frequency at which a phase angle is smallest in a Nyquist plot obtained by performing impedance measurement in a range of 0.1 Hz to 891 kHz with the laminate sandwiched between two SUS plates is 100 kHz to 891 kHz, and a ratio A/B of a resistance value (A) of the impedance measurement and a resistance value (B) of a real part of the impedance at 891 kHz is 1.0 to 3.5.
[3] The battery of [1] or [2], in which
   the solid electrolyte material contains a compound represented by A_{α}M_{β}Z_{γ}D_{ζ}O_{η},
   where A is an alkali metal, M is a metal element or metalloid element except alkali metal elements, Z is a halogen element, D is at least one of P and S, 1.6 ≤ α ≤ 3.5, 0 < β ≤ 1.2, 3 ≤ γ ≤ 6.5, 0 ≤ ζ ≤ 0.5, and 0 ≤ η ≤ 2.
[4] The battery of any one of [1] to [3], in which a volume ratio of the positive electrode active material with respect to a total amount of a volume of the positive electrode active material and a volume of the solid electrolyte material in the positive electrode layer is 0.30 to 0.95.
[5] The battery of any one of [1] to [4], in which the positive electrode layer further contains a binder resin.
[6] The battery of any one of [1] to [5], in which the positive electrode active material is an alkali metal composite oxide containing nickel.

### Advantageous Effects of Invention

According to the present disclosure, it is possible to provide a battery in which a resistance of a layer including an electrolyte layer is small.

### Brief Description of Drawings

FIG. 1 is a scanning electron microscope image of a solid electrolyte material of Example 1.
FIG. 2 is an enlarged view of a part of FIG. 2.
FIG. 3 is a scanning electron microscope image of a cross section of a laminate of Example 2.
FIG. 4 is a scanning electron microscope image of a solid electrolyte material of Comparative Example 1.
FIG. 5 is an enlarged view of a part of FIG. 4.
FIG. 6 is a scanning electron microscope image of a cross section of a laminate of Comparative Example 1.
FIG. 7 is a Nyquist plot of the laminates of Example 1 and Comparative Example 1.

### Description of Embodiments

A battery of the present embodiment includes a laminate having a positive electrode layer and a solid electrolyte layer, in which the positive electrode layer contains a positive electrode active material and a solid electrolyte material, the solid electrolyte material contains an alkali metal element, a metal element or metalloid element except the alkali metal element, and a halogen element and at least one of the following (1) and (2) is satisfied:
(1) when the laminate is punched into a cylindrical shape having a diameter of 10 mm to prepare a test piece and the test piece is sandwiched between two SUS plates and subjected to impedance measurement, a resistance value is 1000 Ω or less; and
(2) a frequency at which a phase angle is smallest in a Nyquist plot obtained by performing impedance measurement in a range of 0.1 Hz to 891 kHz with the laminate sandwiched between two SUS plates is 100 kHz to 891 kHz, and a ratio A/B of a resistance value (A) of the impedance measurement and a resistance value (B) of a real part of the impedance at 891 kHz is 1.0 to 3.5.

The resistance value in (1) may be 750 Ω or less, 500 Ω or less, or 300 Ω or less.

The ratio A/B in (2) may be 1.0 to 3.0 or 1.0 to 2.8. Furthermore, the frequency at which a phase angle is smallest may be 200 kHz or more or 220 kHz or more.

The laminate may be prepared by adding 100 mg of a solid electrolyte layer with respect to 15 mg of a positive electrode material (composition forming a positive electrode) in a cylindrical container having a diameter of 10 mm to prepare a green compact.

The positive electrode layer may be formed by forming a layer containing a positive electrode material containing a positive electrode active material on a current collector. Furthermore, a negative electrode layer may be formed by forming a layer containing a negative electrode material containing a negative electrode active material on a current collector. Examples of the battery include batteries that perform charge and discharge by movement of alkali metal ions, such as a lithium ion battery and a sodium ion battery. The battery may be a primary battery, a secondary battery, or an all-solid-state battery.

The solid electrolyte material contained in the positive electrode layer may contain an alkali metal element, a metal element or metalloid element except the alkali metal element, and a halogen element. Hereinafter, the solid electrolyte material containing an alkali metal element, a metal element or metalloid element except the alkali metal element, and a halogen element is also referred to as a first solid electrolyte material. The first solid electrolyte material may satisfy at least one of the following (A) to (C): (A) the first solid electrolyte material contains In as the metal element except the alkali metal element; (B) the first solid electrolyte material contains Zr as the metal element except the alkali metal element and two or more halogen elements; and (C) the first solid electrolyte material further contains an oxygen element.

The alkali metal element contained in the first solid electrolyte material may be any of Li, Na, K, Rb, or Cs, and the ion conductive substance may contain at least one of Li, Na, or K, may contain at least one of Li or Na, or may contain Li.

Among the alkali metal elements contained in the first solid electrolyte material, the proportion of one alkali metal element may be 80% by mol or more, 90% by mol or more, or 95% by mol or more. The one alkali metal element may be at least one of Li, Na, or K, may be at least one of Li or Na, or may be Li.

A content of the alkali metal element in the first solid electrolyte material may be 15 to 30 mol%, 18 to 28 mol%, or 20 to 27 mol% with respect to the total amount of atoms contained in the first solid electrolyte material.

Examples of the metal element or metalloid element except the alkali metal element include divalent to pentavalent elements, and may include one or more selected from the group consisting of a trivalent element and a tetravalent element. The first solid electrolyte material may contain one or two or more metal elements or metalloid elements except the alkali metal element.

Examples of the divalent element include an alkaline earth metal and Zn. The alkaline earth metal may be at least one of Mg, Ca, Sr, or Ba, may be at least one of Mg or Ca, or may be Mg. Examples of the trivalent metal element include Sc, La, Ce, Pr, Nd, Pm, Sm, Eu, Gd, Tb, Dy, Ho, Er, Yb, Lu, Y, Al, Ga, In, Bi, and Sb. Examples of the tetravalent element include Zr, Ti, Hf, and Sn, and may be Zr. Examples of the pentavalent metal element include Nb and Ta.

The metal element or metalloid element except the alkali metal element may include at least one of In and Zr. A content of the metal element or metalloid element except the alkali metal element in the first solid electrolyte material is preferably 8 to 15 mol%, more preferably 8 to 13 mol%, and further preferably 9 to 12 mol% based on the all elements contained in the first solid electrolyte material.

In the first solid electrolyte material, a total substance amount of Zr and In may be larger than a total substance amount of the metal element or metalloid element except the alkali metal element, Zr, and In. Note that when the first solid electrolyte material contains only one of Zr and In, the total substance amount is the content of the contained element. The total substance amount of Zr and In in the first solid electrolyte material may be 60% by mol or more, 70% by mol or more, 80% by mol or more, or 90% by mol or more of the total substance amount of the metal element or metalloid element except the alkali metal element.

In the first solid electrolyte material, a content of Y in terms of the substance amount may be smaller than the total substance amount of Zr and In. Note that when the first solid electrolyte material contains only one of Zr and In, the total substance amount is the content of the contained element. The content of Y of the first solid electrolyte may be 40% by mol or less, 30% by mol or less, 20% by mol or less, or 10% by mol or less with respect to the total substance amount of the metal element or metalloid element except the alkali metal element. The first solid electrolyte material may no substantially contain Y.

The first solid electrolyte material may contain 70% by mol or more, 75% by mol or more, or 80% by mol or more of one element of the metal elements or metalloid elements except the alkali metal element with respect to the total amount of the metal elements or metalloid elements except the alkali metal element. In this case, the one element may be a trivalent or tetravalent element, and may be In or Zr. In this case, the first solid electrolyte material contains a metal element or metalloid element (also referred to as a dopant element X1) other than the one element except the alkali metal element. The dopant element X1 is an element different from the one element. When the one element is a trivalent element, the dopant element X1 may be at least one element selected from the group consisting of Zr, Sn, Ti, Nb, Ta, Bi, and Y, and may be at least one element selected from the group consisting of Zr, Sn, Nb, and Ta. When the one element is a tetravalent element, the dopant element X1 may be at least one element selected from the group consisting of Bi, Al, Ga, In, Sc, Sm, Sb, La, Zn, Sn, and an alkaline earth metal, and may be at least one element selected from the group consisting of Bi, La, Zn, and Sn.

The halogen element contained in the first solid electrolyte material of the present embodiment may be any of F, Cl, Br, or I, and may include at least one of Cl, Br, or I, may include at least one of Cl or Br, or may include Cl. The ion conductive substance may contain only one halogen element, or may contain two or more halogen elements. When the first solid electrolyte material contains Zr as the metal element except the alkali metal element, the first solid electrolyte material may contain two or more halogen elements, may contain Cl and a halogen element except Cl, and may contain Cl and Br. A content of the halogen element except Cl or a content of Br may be 10 mol% or less, 0.1 to 10 mol%, or 1 to 8 mol% with respect to the total amount of the halogen elements contained in the first solid electrolyte material.

A content of the halogen element in the first solid electrolyte material is preferably 40 to 70 mol% and more preferably 45 to 68 mol% based on all elements contained in the halogen element.

The first solid electrolyte material may contain 80% by mol or more, 85% by mol or more, or 90% by mol or more of one element of the halogen elements with respect to the total amount of the halogen elements. The one halogen element may be Cl or Br, and may be Cl. In this case, the first solid electrolyte material contains a halogen element (also referred to as a dopant element X2) except the one halogen element. When the one halogen element is Cl, the dopant element X2 may be at least one of Br and I, and may be Br.

The first solid electrolyte material may contain at least one of P and S (also referred to as a dopant element X3). A content of the dopant element X3 in the first solid electrolyte material may be 0.05 to 5 mol%, 0.1 to 3 mol%, 0.2 to 2 mol%, or 0.3 to 1 mol% with respect to the total amount of atoms contained in the first solid electrolyte material.

When the first solid electrolyte material contains at least one of P and S, the first solid electrolyte material may contain a tetravalent metal element or metalloid element. Examples of the tetravalent metal element or metalloid element include Zr, Ti, and Hf, and may be Zr. Furthermore, at least one of Hf and Mg may be contained as the dopant element X2.

The content of the dopant element X3 in the first solid electrolyte material may be 50 mol% or less, 1 to 30 mol%, 1 to 20 mol%, or 2 to 10 mol% of the content of the tetravalent metal element or metalloid element. The content of the dopant element X in the first solid electrolyte material may be 20% by mol or less, 15% by mol or less, 10% by mol or less, or 8% by mol or less of the content of the tetravalent metal element or metalloid element.

The solid electrolyte material may have a hexagonal crystal structure, and may have a crystal structure belonging to the space group P6₃mc. The solid electrolyte material having a hexagonal crystal structure may contain at least one element selected from the group consisting of Sc, La, Y, Ga, In, Bi, Sb, Ge, Zr, Sn, Nb, and Ta, and may contain Sc.

The first solid electrolyte material may contain a compound represented by the following formula (A):

A_{α}M_{β}Z_{γ}D_{ζ}O_{η} ... (A)

where A is an alkali metal, M is a metal element or metalloid element except alkali metal elements, Z is a halogen element, D is at least one ofP and S, 1.6 ≤ α ≤ 3.5, 0 < β ≤ 1.2, 3 ≤ γ ≤ 6.5, 0 ≤ ζ ≤ 0.5, and 0 ≤ η ≤ 2.

Examples of the compound represented by formula (A) include compounds represented by the following formulae (1) to (3):

A_{α1}M_{β1}Z_{6-δ1}X_{ε11}X_{ε12} ··· (1)

A_{α2}M_{β2}X2_{ε21}Z_{6-γ2}X1_{ε22} ··· (2)

A_{α3}M_{β3}X2_{ε31}Z_{δ3}D_{ζ}Q_{η} ··· (3)

In formula (1), A, M, and Z are each an alkali metal element, a trivalent metal element or metalloid element, or a halogen element, and specific examples thereof include those described above. M preferably includes In. X1 and X2 are the dopant element X1 and the dopant element X2, respectively, and specific examples thereof include those described above. α1 may be 2 ≤ α1 ≤ 3.5 or 2.5 ≤ α1 ≤ 3. β1 may be 0.5 ≤ β1 ≤ 1.1 or 0.5 ≤ β1 ≤ 1. δ1 may be 0 ≤ δ1 ≤ 1 or 0 ≤ δ1 ≤ 0.5. ε11 may be 0 ≤ ε11 ≤ 0.7, 0 < ε11 ≤ 0.5, or 0.01 ≤ ε11 ≤ 0.3. ε12 may be 0 ≤ ε12 ≤ 0.7, 0 < ε11 ≤ 0.5, or 0.01 ≤ ε11 ≤ 0.3.

In formula (2), A, M, and Z are each an alkali metal element, a tetravalent metal element or metalloid element, or a halogen element, and specific examples thereof include those described above. M preferably includes Zr. X1 and X2 are the dopant element X1 and the dopant element X2, respectively, and specific examples thereof include those described above. α2 may be 1.6 ≤ α2 ≤ 2.5, 1.8 ≤ α2 ≤ 2.4, or 2 ≤ α2 ≤ 2.3. β2 may be 0 < β2 ≤ 1.1, 0.5 ≤ β2 ≤ 1, or 0.8 ≤ β2 ≤ 1. γ2 may be 0 ≤ γ2 < 1, 0.01 ≤ γ2 ≤ 0.8, 0.02 ≤ γ2 ≤ 0.7, 0.1 ≤ γ2 ≤ 0.6, or 0.2 ≤ γ2 ≤ 0.6. ε21 may be 0 ≤ ε21 ≤ 0.7, 0 < ε21 ≤ 0.5, or 0.01 ≤ ε21 ≤ 0.3. ε22 may be 0 ≤ ε22 ≤ 0.8 or 0 < ε21 ≤ 0.6. When X2 is iodine, ε21 may be 0.01 ≤ ε21 ≤ 0.3 or 0.015 ≤ ε21 ≤ 0.1.

In formula (3), A, M, and Z are each an alkali metal element, a tetravalent metal element or metalloid element, or a halogen element, and specific examples thereof include those described above. M preferably includes Zr. X1 and D are the dopant element X1 and the dopant element X3, respectively, and specific examples thereof include those described above. α may be 1.5 ≤ α ≤ 3, 1.8 ≤ α3 ≤ 2.5, 1.9 ≤ α3 ≤ 2.3, or 1.95 ≤ α3 ≤ 2.2. β may be 0.5 ≤ β ≤ 2, 0.7 ≤ β3 ≤ 1.4, 0.8 ≤ β3 ≤ 1.2, or 0.9 ≤ β3 ≤ 1.1. ζ may be 0.005 ≤ ζ ≤ 0.5, 0.01 ≤ ζ ≤ 0.2, 0.02 ≤ ζ ≤ 0.15, or 0.025 ≤ ζ ≤ 0.10. δ3 may be 3.5 ≤ δ3 ≤ 5, 3.7 ≤ δ3 ≤ 4.3, or 3.8 ≤ δ3 ≤ 4.1. η may be 0.1 ≤ η ≤ 1.5, 0.7 ≤ η ≤ 1.5, 0.8 ≤ η ≤ 1.3, or 0.9 ≤ η ≤ 1.1.

The first solid electrolyte material may have a particle shape. In this case, an average particle size of the first solid electrolyte material may be 1 to 50 µm. Furthermore, the particles of the first solid electrolyte material may have an irregularity structure having a size of 0.5 to 2 µm. The particles of the first solid electrolyte material may not have microcracks having a size of 0.5 µm or more.

A method for producing the first solid electrolyte material is not particularly limited, and examples thereof include a method including a step of performing ball milling on a raw material. A product after ball milling may be subjected to annealing. Furthermore, when a hexagonal solid electrolyte material is obtained, the method for producing the first solid electrolyte material may include a step of heating a raw material under a pressure of 1 GPa or more.

The raw material is not particularly limited, and may be, for example, an alkali metal halide, a chloride of a metal element or metalloid element except alkali metals, or a compound containing the dopant element X1 or X2. When the dopant element is X1, a compound containing the dopant element may be a halide of X1. When the dopant element is X2, a compound containing the dopant element may be an alkali metal bromide or an alkali metal iodide. It is preferable to mix the raw materials before performing the ball milling, and it is more preferable to mix the raw materials under an inert atmosphere (for example, Ar atmosphere).

The conditions of the ball milling are not particularly limited, and can be set to 10 to 100 hours at a rotation speed of 200 to 700 rpm. The rotation speed may be 250 to 600 rpm or 300 to 500 rpm. The grinding time is preferably 24 hours to 72 hours and more preferably 36 to 60 hours.

The balls used to perform the ball milling are not particularly limited, and zirconia balls can be used. The size of the balls used is not particularly limited, and balls of 2 mm to 10 mm can be used.

As the balls, it is preferable to combine two or more kinds of large and small balls.

For example, balls having a diameter of 4 mm and balls having a diameter of 8 mm can be combined. At this time, a total weight of balls having a size of 4 mm is preferably larger than a total weight of balls having a size of 8 mm.

The raw materials are sufficiently mixed by performing the ball milling for the above-described time, and the mechanochemical reaction is promoted, so that the ionic conductivity of the obtained compound can be improved.

The ball milling may have multi-stage steps with different rotational speeds. For example, the step of performing ball milling may include a first step, a second step, and a third step in this order, and the rotation speed in the second step may be larger than those in the first step and the third step. Furthermore, in this case, the rotation speed in the third step may be larger than that in the first step.

The annealing is preferably performed under an inert atmosphere or under vacuum. The annealing temperature is, for example, preferably 150 to 300°C and more preferably 200 to 250°C. The annealing time may be, for example, 1 to 10 hours, and is preferably 3 to 6 hours.

The positive electrode active material is not particularly limited, and examples thereof include an alkali metal-containing composite oxide containing an alkali metal element and at least one metal element selected from the group consisting of a transition metal element and Al. The transition metal element may be at least one selected from the group consisting of V, Cr, Mn, Fe, Co, Ni, and Cu, and may include Ni. For example, when the alkali metal element is lithium (that is, a lithium-containing composite oxide), examples of the lithium-containing composite oxide include LiCoO₂, LiNiO₂, LiMn₂O₄, LiNi_{0.5}Mn_{1.5}O₄, Li₂MnO₃, LiNiₓMn_{y}Co_{1-x-y}O₂ [0 < x+y < 1]), LiNiₓCo_{y}Al_{1-x-y}O₂ [0 < x+y < 1]), LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. When the positive electrode active material contains an alkali metal element except Li, specific examples thereof include those in which Li in the above specific examples is replaced with another alkali metal. Examples of the alkali metal except Li include Na and K.

A content of the positive electrode active material in the positive electrode material may be 50 mass% or more, 60 mass% or more, or 70 mass% or more with respect to the total amount of the positive electrode material. The content of the positive electrode active material in the positive electrode material may be 99 mass% or less, 95 mass% or less, or 90 mass% or less with respect to the total amount of the positive electrode material. Furthermore, the content of the positive electrode active material in the positive electrode material may be 50 to 99 mass%, 60 to 95 mass%, or 70 to 90 mass% with respect to the total amount of the positive electrode material. A volume ratio of the positive electrode active material with respect to a total amount of a volume of the positive electrode active material and a volume of the solid electrolyte material in the positive electrode layer may be 0.30 to 0.95.

The positive electrode layer (positive electrode material) of the present embodiment may further contain a binder resin (binder), a conductive auxiliary agent, or the like. The binder resin is not particularly limited, and examples thereof include a fluorine-based resin. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). A content of the binder resin in the positive electrode layer may be 0.5 to 10 mass% or 1 to 7 mass%.

Examples of the conductive auxiliary agent include carbon materials such as graphites such as natural graphite (scale-like graphite or the like) and artificial graphite; carbon blacks such as acetylene black, Ketjen black, channel black, furnace black, lamp black, and thermal black; and carbon fibers. A content of the conductive auxiliary agent in the positive electrode layer may be 0.5 to 10 mass% or 1 to 7 mass%.

The solid electrolyte material contained in the positive electrode layer may be one or two kinds of the above-described first solid electrolyte material and a second solid electrolyte material.

The positive electrode layer may have a region having no microcrack exceeding 10 µm within a range of 20 µm in the vertical direction (normal direction) from an interface between the positive electrode layer and the solid electrolyte layer. Furthermore, a void structure may exist in the region.

The negative electrode material may contain a negative electrode active material, and as necessary, a polymer electrolyte, a binder resin, a conductive auxiliary agent, an organic solvent, an ionic liquid, and the like.

Examples of the negative electrode active material include an alkali metal element, a simple substance of an element such as Si, P, Sn, Si-Mn, Si-Co, Si-Ni, In, or Au, an alloy or a composite containing these elements, a carbon material such as graphite, a substance in which alkali metal ions are inserted between layers of the carbon material, and a titanium-containing oxide. The alkali metal element may be Li, Na, or K, may be Li or Na, and may be Li.

The titanium-containing oxide may be a compound represented by the composition formula: AₛTiOₜ (A is an alkali metal element, and s ≥ 0). Here, the alkali metal element A may be Li, Na, or K, may be Li or Na, and may be Li.

The solid electrolyte layer may be formed of an electrolyte composition. The electrolyte composition may contain a solid electrolyte material, and as necessary, a polymer electrolyte, a binder resin, an organic solvent, an ionic liquid, and the like. The solid electrolyte material may contain at least one of the above-described first solid electrolyte material and a solid electrolyte material (second solid electrolyte material) except the first solid electrolyte material.

The second solid electrolyte material is not particularly limited, and may be an oxide (oxide-based solid electrolyte), a sulfide (sulfide-based solid electrolyte), a hydride (hydride-based solid electrolyte), or the like. The second solid electrolyte material may contain an alkali metal element.

### (Oxide-based Solid Electrolyte)

Examples of the oxide-based solid electrolyte include an oxide such as perovskite-type oxide, NASICON-type oxide, LISICON-type oxide, or garnet-type oxide, and an oxide obtained by doping the oxide with other cations or anions.

Examples of the perovskite-type oxide include Li-La-Ti-based oxide such as LiₐLa₁₋ₐTiO₃ (0 < a < 1), Li-La-Ta-based oxide such as Li_{b}La_{1-b}TaO₃ (0 < b < 1), and Li-La-Nb-based oxide such as Li_{c}La_{1-c}NbO₃ (0 < c < 1).

Examples of the NASICON-type oxide include Li_{1+d}Al_{d}Ti_{2- d}(PO₄)₃ (0 ≤ d ≤ 1). The NASICON-type oxide is an oxide represented by LiₘM¹ₙM²ₒPₚO_{q} (in the formula, M¹ is one or more elements selected from the group consisting of B, Al, Ga, In, C, Si, Ge, Sn, Sb, and Se, M² is one or more elements selected from the group consisting of Ti, Zr, Ge, In, Ga, Sn, and Al, and m, n, o, p, and q are any positive numbers), and examples thereof include Li_{1+x+y}Aₗₓ(Ti,Ge)₂₋ₓSi_{y}P_{3-y}O₁₂ (0 < x < 2, 0 < y < 3) (LATP).

Examples of the LISICON-type oxide include an oxide represented by Li₄M³O₄-Li₃M⁴O₄ (M³ represents one or more elements selected from the group consisting of Si, Ge, and Ti, and M⁴ represents one or more elements selected from the group consisting of P, As, and V).

Examples of the garnet-type oxide include Li-La-Zr-based oxide such as Li₇La₃Zr₂O₁₂ (LLZ) or Li₇₋ₐ₂La₃Zr₂₋ₐ₂Taₐ₂O₁₂ (LLZT, 0 < a2 < 1, 0.1 < a2 < 0.8, 0.2 < a2 < 0.6).

The oxide-based solid electrolyte may be a crystalline material or an amorphous material.

Examples of the oxide-based solid electrolyte include Li_{6.6}La₃Zr_{1.6}Ta_{0.4}O₁₂ and Li_{0.33}La_{0.55}TiO₃.

### (Sulfide-based Solid Electrolyte)

Examples of the sulfide-based solid electrolyte include a Li₂S-P₂S₅-based compound, a Li₂S-SiS₂-based compound, a Li₂S-GeS₂-based compound, a Li₂S-B₂S₃-based compound, a Li₂S-P₂S₃-based compound, LiI-Si₂S-P₂S₅, LiI-Li₂S-P₂O₅, LiI-Li₃PO₄-P₂S₅, and Li₁₀GeP₂S₁₂.

Note that, in the present specification, the expression "-based compound" indicating a sulfide-based solid electrolyte is used as a generic term for solid electrolytes mainly containing raw materials such as "Li₂S" and "P₂S₅" described before "-based compound". For example, the Li₂S-P₂S₅-based compound includes a solid electrolyte containing Li₂S and P₂S₅ and further containing other raw materials. In addition, the Li₂S-P₂S₅-based compound also includes a solid electrolyte in which a mixing ratio of Li₂S and P₂S₅ is different.

Examples of the Li₂S-P₂S₅-based compound include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, and Li₂S-P₂S₅-ZₘSₙ (m and n are positive numbers, and Z is Ge, Zn, or Ga).

Examples of the Li₂S-SiS₂-based compound include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (x and y are positive numbers, and M is P, Si, Ge, B, Al, Ga, or In).

Examples of the Li₂S-GeS₂-based compound include Li₂S-GeS₂ and Li₂S-GeS₂-P₂S₅.

The sulfide-based solid electrolyte may be a crystalline material or an amorphous material.

### (Hydride-based Solid Electrolyte)

Examples of the hydride-based solid electrolyte material include LiBH₄, LiBH₄-3KI, LiBH₄-PI₂, LiBH₄-P₂S₅, LiBH₄-LiNH₂, 3LiBH₄-LiI, LiNH₂, Li₂AlH₆, Li(NH₂)₂I, Li₂NH, LiGd(BH₄)₃Cl, Li₂(BH₄)(NH₂), Li₃(NH₂)I, and Li₄(BH₄)(NH₂)₃.

Examples of the second solid electrolyte material include compounds in which a part or all of Li of the compounds listed as specific examples of the oxide-based solid electrolyte, the sulfide-based solid electrolyte, or the hydride-based solid electrolyte is substituted with Na, K, Rb, or Cs.

The battery may include a separator. The separator may be a porous material or a resin porous material. Specific examples thereof include a porous polyolefin membrane and a porous ceramic membrane.

A method for producing a battery of the present embodiment is not particularly limited, and the method may include a step of producing a positive electrode by pressurizing a positive electrode material and a step of producing a solid electrolyte layer by pressurizing an electrolyte composition. The step of producing a positive electrode by pressurizing a positive electrode material and the step of producing a solid electrolyte by pressurizing an electrolyte composition may be performed simultaneously. In this case, a first electrolyte composition is disposed on a positive electrode material and pressed together to produce a positive electrode and a solid electrolyte layer. Furthermore, a negative electrode may be formed by disposing a negative electrode on a solid electrolyte layer or disposing a negative electrode material and pressurizing the negative electrode material.

### Examples

### (Example 1)

In an argon atmosphere having a dew point of -70°C or lower (hereinafter, referred to as a dry argon atmosphere), LiCl, ZrCl₄, BiCl₃, ZnCl₂, and LiBr were mixed so as to have a starting composition of Li_{2.05}Zr_{0.96}Bi_{0.03}Zn_{0.01}Cl_{5.7}Br_{0.3}, thereby preparing a raw material.

In a zirconia pot for planetary ball milling, 1.2 g of the raw material was put, and 55 g of zirconia balls having a diameter of 4 mm and 15 g of zirconia balls having a diameter of 8 mm were put therein. A ball milling step by the planetary ball milling apparatus at 300 rpm for 8 hours, 350 rpm for 8 hours, and 320 rpm for 8 hours was performed in this order, and the mixture was mechanochemically reacted to obtain a solid electrolyte material. The ball milling was operated in a mode in which the ball mill rotates for 10 minutes, followed by a 1-minute stop as an interval, and the rotation direction is alternately switched between clockwise and counterclockwise.

### <Observation of Particles with Scanning Electron Microscope (SEM)>

Observation was performed using a scanning electron microscope JCM-7000 (manufactured by JEOL Ltd.). Particles of a solid electrolyte material prepared under conditions of an acceleration voltage of 15 kV and a high vacuum mode were observed.

### <Measurement of Resistance Value>

In a dry argon atmosphere, the solid electrolyte material of Example 1, LiNi_{1/3}Mn_{1/3}Co_{1/3}O₂, and acetylene black were weighed as 29 parts by mass, 67 parts by mass, and 4 parts by mass respectively, and mixed in a mortar to obtain a mixture.

In an insulating cylinder having an inner diameter of 10 mm, 100 mg of the solid electrolyte material of Example 1 and 15 mg of the above-described mixture were sequentially laminated to obtain a laminate. A pressure of 370 MPa was applied to the laminate to form a first electrode (the layer of the mixture) and a first solid electrolyte layer (the layer of the solid electrolyte material of Example 1, 0.5 mm).

Next, a press molding die including a frame, a punch lower part, and a punch upper part were prepared. Note that the frame was formed of insulating polycarbonate. Furthermore, both the punch upper part and the punch lower part were formed of electron-conductive stainless steel (SUS), and were electrically connected to terminals of an impedance analyzer (Sl 1260 manufactured by Solatron Analytical).

The ionic conductivity was measured by the following method using the press molding die. First, filling of each electrolyte material of Example and Comparative Example onto the punch lower part inserted vertically downward into a hollow section of the frame was carried out in a dry argon atmosphere. Then, the punch upper part was pressed toward the hollow section of the frame from above to apply a pressure of 370 MPa to the electrolyte material inside the press molding die. After the pressure was applied, a punch was fastened and fixed vertically with a jig, and the impedance of the electrolyte material at 25°C was measured by an electrochemical impedance measurement method using the impedance analyzer with a constant pressure maintained.

From the impedance measurement results, a graph of a Cole-Cole plot (Nyquist plot) was created. In the Cole-Cole plot, the real part of the impedance at the measurement point where the absolute value of the phase of the complex impedance is smallest was regarded as a resistance value.

Furthermore, the frequency at which a phase angle is smallest in a Nyquist plot obtained by performing impedance measurement in a range of 0.1 Hz to 891 kHz and the ratio A/B of the resistance value (A) of the impedance measurement and the resistance value (B) of the real part of impedance at 891 kHz are collectively shown in Table 1.

### <Observation of Cross Section with Scanning Electron Microscope (SEM)>

Observation was performed using a scanning electron microscope JCM-7000 (manufactured by JEOL Ltd.). Observation was performed under conditions of an acceleration voltage of 15 kV and a high vacuum mode.

For a measurement sample, as described above, the laminate produced in the press molding die was taken out, and cut in the thickness direction, and the cross section thereof was observed.

### (Example 2)

Synthesis was performed under the same conditions as in Example 1 except that in an argon atmosphere having a dew point of -70°C or lower (hereinafter, referred to as a dry argon atmosphere), Li₂O, Li₃PO₄,ZrCl₄, and MgCl₂ were mixed so as to have a starting composition of Li₂Zr_{0.95}Mg_{0.05}Cl_{3.9}O(PO₄)_{0.033}, thereby preparing a raw material, and impedance was measured.

### (Comparative Example 1)

LiCl and YCl₃ were used as raw materials, and mixed at a molar ratio of 3 : 1 to prepare a raw material. A solid electrolyte material (Li₃YCl₆) was obtained in the same manner as in Example 1. A laminate was prepared in the same manner as in Example 1 using the obtained solid electrolyte material, and the cross sections of the solid electrolyte material and the laminate were observed with a scanning electron microscope, and the resistance value of the laminate was measured. The resistance value was 2400 Ω.

**[Table 1]**

| | Frequency | Resistance value A (Ω) | Resistance value B (Ω) | A/B | Microcracks |
|---|---|---|---|---|---|
| Example 1 | 250 kHz | 270 | 104.8 | 2.58 | Absent |
| Example 2 | 107 kHz | 107 | 71.4 | 1.50 | Absent |
| Comparative Example 1 | 71 kHz | 2400 | 665 | 3.61 | Present |

| | | | | | |
|---|---|---|---|---|---|
| * 1: Frequency at which phase angle is smallest *2: Resistance value of real part of impedance at frequency at which phase angle is smallest *3: Resistance value of real part of impedance at 891 kHz | | | | | |

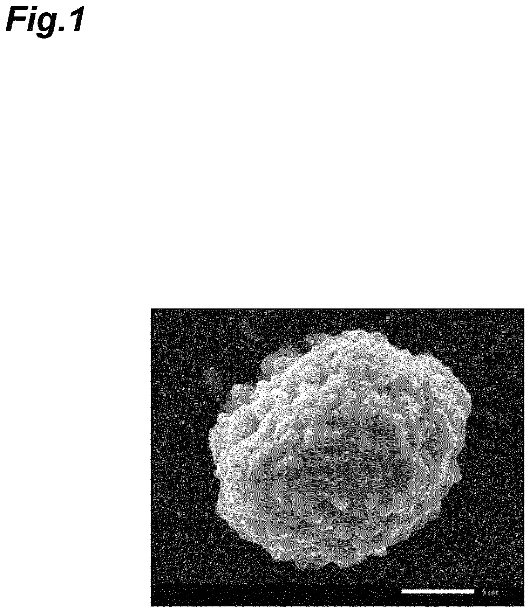

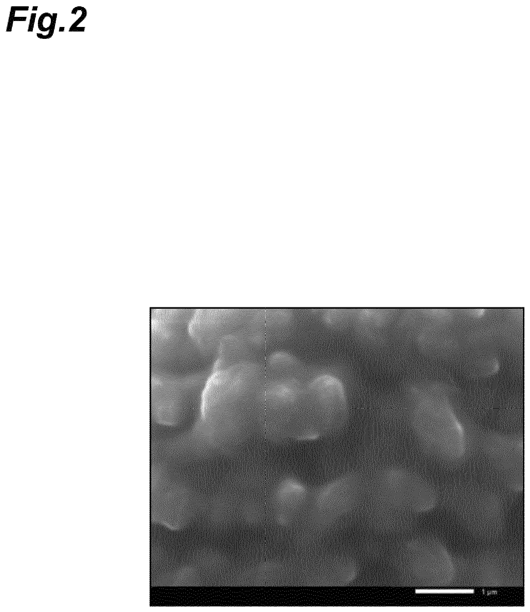

FIG. 1 is a scanning electron microscope image of particles of a solid electrolyte material of Example 1. FIG. 2 is an enlarged view of a part of FIG. 1. As can be seen from FIG. 1 and FIG. 2, the particles of the solid electrolyte material of Example 1 had an irregularity structure having a size of 0.5 to 2 µm.

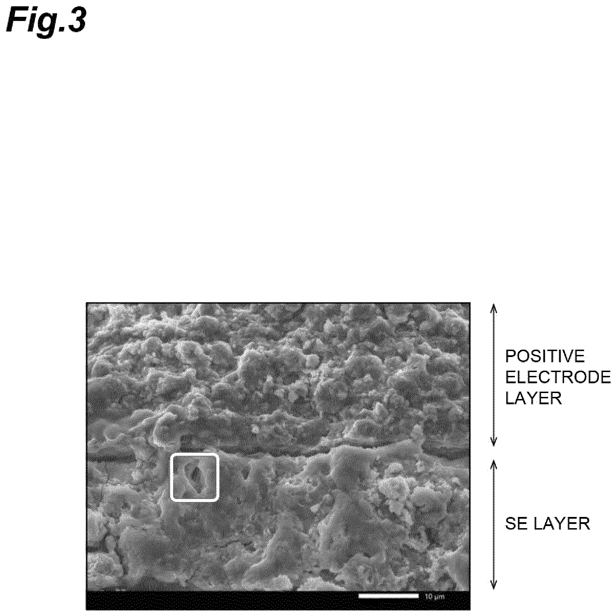

Furthermore, FIG. 3 is a scanning electron microscope image of a cross section of a laminate of Example 1. As shown in FIG. 3, although voids having a diameter of about 2 to 5 µm were observed, large microcracks were not observed in both the positive electrode layer and the solid electrolyte layer.

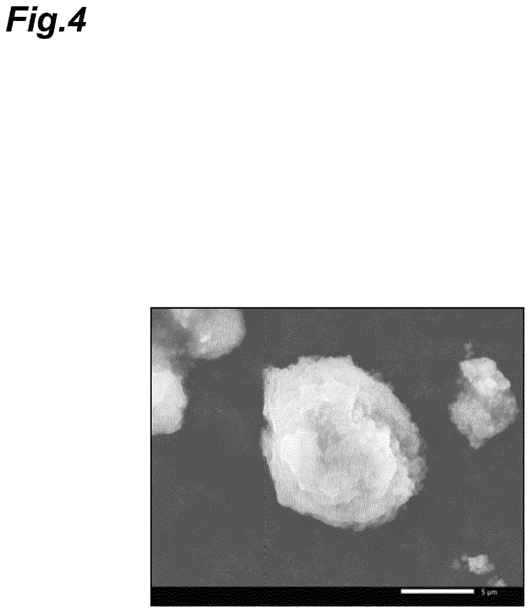

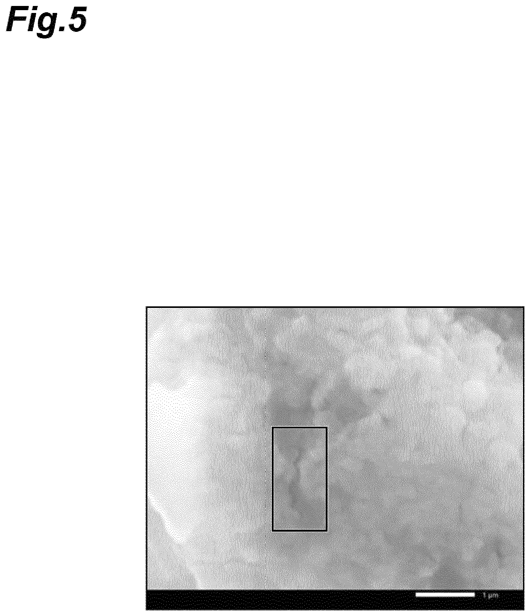

FIG. 4 is a scanning electron microscope image of particles of a solid electrolyte material of Comparative Example 1. FIG. 5 is an enlarged view of a part of FIG. 4. As can be seen from FIG. 5, the particles of Comparative Example 1 did not have a clear irregularity structure, and microcracks were observed in a portion surrounded by a square in FIG. 5.

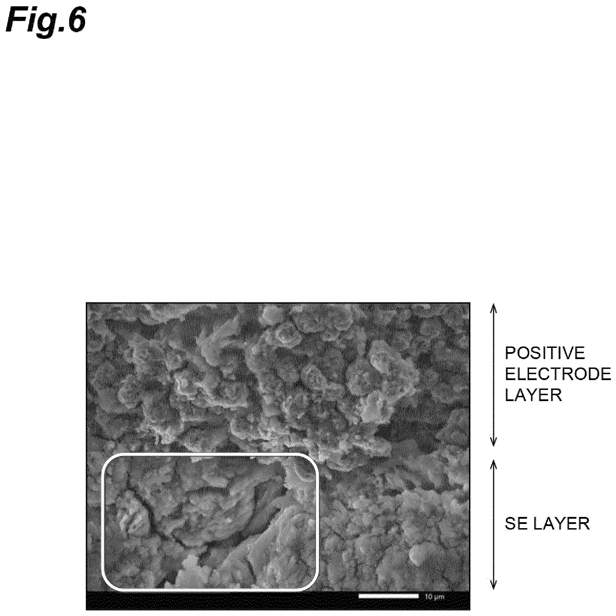

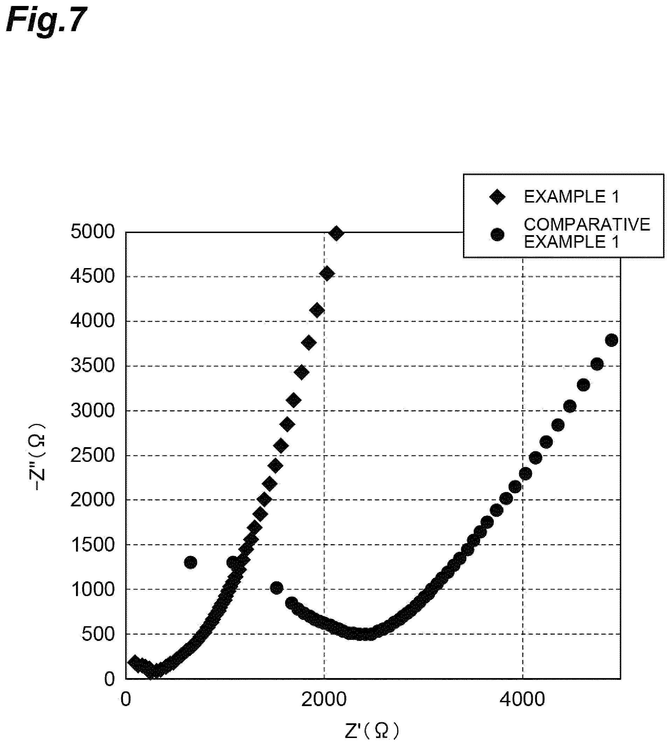

Furthermore, FIG. 6 is a scanning electron microscope image of a cross section of a laminate of Comparative Example 1. As shown in FIG. 6, although voids having a diameter of about 2 to 5 µm were observed, many microcracks were observed in both the positive electrode layer and the solid electrolyte layer, and the microcracks in the solid electrolyte layer had a length exceeding 10 µm (a portion surrounded by a square in FIG. 6). Furthermore, FIG. 7 shows a Nyquist plot of the laminate of Example 1 and the laminate of Comparative Example 1 described later.

## Claims

1. A battery comprising
a laminate composed of a positive electrode layer and a solid electrolyte layer, wherein
the positive electrode layer contains a positive electrode active material and a solid electrolyte material,
the solid electrolyte material contains an alkali metal element, a metal element or metalloid element except the alkali metal element, and a halogen element, and
when the laminate is punched into a cylindrical shape having a diameter of 10 mm to prepare a test piece and the test piece is sandwiched between two SUS plates and subjected to impedance measurement, a resistance value is 1000 Ω or less.

2. A battery comprising
a laminate composed of a positive electrode layer and a solid electrolyte layer, wherein
the positive electrode layer contains a positive electrode active material and a solid electrolyte material,
the solid electrolyte material contains an alkali metal element, a metal element or metalloid element except the alkali metal element, and a halogen element, and
a frequency at which a phase angle is smallest in a Nyquist plot obtained by performing impedance measurement in a range of 0.1 Hz to 891 kHz with the laminate sandwiched between two SUS plates is 100 kHz to 891 kHz, and a ratio A/B of a resistance value (A) of a real part of the impedance measurement at the frequency at which a phase angle is smallest and a resistance value (B) of a real part of the impedance at 891 kHz is 1.0 to 3.5.

3. The battery according to claim 1 or 2, wherein
the solid electrolyte material contains a compound represented by A_{α}M_{β}Z_{γ}D_{ζ}O_{η},
where A is an alkali metal, M is a metal element or metalloid element except alkali metal elements, Z is a halogen element, D is at least one of P and S, 1.6 ≤ α ≤ 3.5, 0 < β ≤ 1.2, 3 ≤ γ ≤ 6.5, 0 ≤ ζ ≤ 0.5, and 0 ≤ η ≤ 2.

4. The battery according to claim 1 or 2, wherein a volume ratio of the positive electrode active material with respect to a total amount of a volume of the positive electrode active material and a volume of the solid electrolyte material in the positive electrode layer is 0.30 to 0.95.

5. The battery according to claim 1 or 2, wherein the positive electrode layer further contains a binder resin.

6. The battery according to claim 1 or 2, wherein the positive electrode active material is an alkali metal-containing composite oxide containing nickel.
